# EUROPEAN PATENT APPLICATION

(11) **EP 4 679 512 A1**
(43) Date of publication of application: **14.01.2026**
(21) Application number: 24843488.8
(22) Date of filing: 17.07.2024
(51) Int. Cl.: H01M 4/04, G01N 21/89, G01N 21/88

(54) **ROLL MAP GENERATION SYSTEM AND METHOD FOR GENERATING ROLL MAP**

(30) Priority: 18.07.2023 KR 20230092808
(71) Applicant: LG Energy Solution, Ltd., Seoul 07335 (KR)
(72) Inventor: SU, Jun Hyo, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/010240
(87) International publication number: WO 2025/018773

(57) **Abstract**

A method for generating a roll map includes: cutting a cutting position of an electrode sheet that moves between an unwinder and a rewinder so as to provide a first lot; and identifying a correcting section of the electrode sheet. The correcting section is between the cutting position of the electrode sheet and a portion of the electrode sheet sensed by a sensing unit at the time the electrode sheet is cut.

## Description

### [Technical Field]

The present invention relates to a system configured to generate a roll map indicating a lot that is a unit of a wound electrode sheet, and a roll map generating method. The present application claims the benefit of priority based on Korean Patent Application No. 10-2023-0092808, filed on July 18, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a roll map generating method. The roll map generating method includes cutting a cutting part of the electrode sheet to provide a first lot, the electrode sheet being moved between an unwinder and a rewinder, and identifying a calibration section of the electrode sheet, in which the calibration section is between a part of the electrode sheet sensed by a sensing part when the electrode sheet is cut and the cutting part of the electrode sheet.

A lot identifier (ID) of data collected from the calibration section may indicate the first lot.

The roll map generating method may further include assigning the data collected from the calibration section to a roll map of a second lot subsequent to the first lot.

The assigning of the data to the roll map of the second lot subsequent to the first lot may include setting a lot ID of the data to indicate the second lot.

The roll map generating method may further include calibrating coordinates of data collected from the calibration section.

A lower limit of coordinates of data collected from the calibration section may be a completed length of the first lot.

The coordinates of the data may be calibrated based on the completed length.

The coordinates of the data may be calibrated based on subtraction of the completed length.

An upper limit of the coordinates of the data may be a sum of the completed length and an offset length, and the offset length may be a length of **the electrode sheet between the sensing part and the rewinder.

Example embodiments provide a roll map generating method. The roll map generating method includes cutting a cutting part of the electrode sheet to provide a first lot, the electrode sheet being moved between an unwinder and a rewinder, and identifying a calibration section of the electrode sheet, in which the calibration section is between a part of the electrode sheet processed by a processing apparatus when the electrode sheet is cut and the cutting part of the electrode sheet.

The roll map generating method may further include assigning equipment data collected from the processing apparatus to a roll map of a second lot subsequent to the first lot.

The roll map generating method may further include calibrating coordinates of data collected from the calibration section.

A lower limit of coordinates of data collected from the calibration section may be a completed length of the first lot.

The coordinates of the data may be calibrated based on the completed length.

An upper limit of the coordinates of the data may be a sum of the completed length and an offset length, and the offset length may be a length of the electrode sheet between the processing apparatus and the rewinder.

### [Advantageous Effects]

According to example embodiments of the present invention, a system for generating a roll map that enables feedback, feedforward, and tracking of an electrode process can be provided.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a flowchart of a roll map generating method according to example embodiments.
FIG. 3 is a diagram for describing a roll map generating method according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

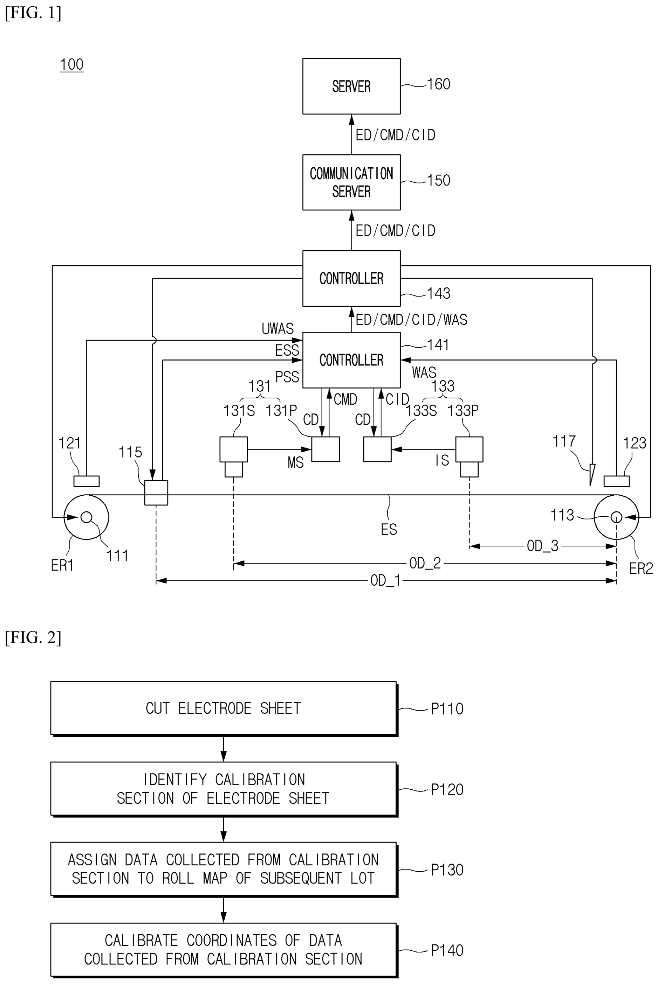

FIG. 1 illustrates a roll map generating system 100 according to example embodiments.

Referring to FIG. 1, the roll map generating system 100 may include an unwinder 111, a rewinder 113, a processing apparatus 115, a completion knife 117, a first rotary encoder 121, a second rotary encoder 123, a measuring device 131, an inspector 133, a first controller 141, a second controller 143, a communication server 150, and a server 160.

The roll map generating system 100 may be configured to generate a roll map including data about an electrode sheet ES. The roll map may represent the electrode sheet ES based on coordinates indicating a position on the electrode sheet ES. A secondary battery manufacturing process may be performed on the electrode sheet ES. The roll map may include data that represents a history of processes performed on the electrode sheet ES and is related to coordinates. Accordingly, the roll map enables feedback, feedforwarding, and tracking of the secondary battery manufacturing process as described below.

A first electrode roll ER1 on which a previous process is performed may be loaded on the unwinder 111. The unwinder 111 may be configured to unwind the electrode sheet ES from the first electrode roll ER1. The rewinder 113 may be configured to wind the electrode sheet ES to form a second electrode roll ER2. Accordingly, the electrode sheet ES may be moved between the unwinder 111 and the rewinder 113. An electrode process is performed on the electrode sheet ES unwound from the first electrode roll ER1 and wound into the second electrode roll ER2 and thus may be a roll-to-roll process.

Roll maps may be generated in units of lots. The electrode sheet ES may be wound into the second electrode roll ER2 and be cut and separated by the completion knife 117 after a certain winding length is reached. A lot is a production unit of the roll-to-roll process, and the separated second electrode roll ER2 is an example of lot. Accordingly, the server 160 may be configured to store a roll map of a previous process. The roll map of the previous process may correspond to the first electrode roll ER1. In addition, the server 160 may generate and store a roll map of a current process. The roll map of the current process may correspond to the second electrode roll ER2.

In a roll map, time series data constructed over time (i.e., according to the progress of a process) may be related to coordinate data CD collected based on the amount of movement (i.e., the amount of winding or the amount of unwinding) of the electrode sheet ES.

The manufacture of a secondary battery involves a series of different processes, and a leading process affects the following process. In this case, when time series data of the leading process does not directly match a workpiece, an intermediate product, and a product of the real world, it is difficult to reflect the time series data of the leading process in the following process. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforwarding, time series data of a roll map should be related with positions on workpieces, components, intermediate products, and products of the real world. The roll map may allow time series data to be related with coordinate data including coordinates of the positions on the workpieces, the components, the intermediate products, and the products of the real world. The roll map may provide matching between time series data and the workpieces, the components, the intermediate products, and the products of the real world, based on the coordinate data. Accordingly, feedforward based on generation of the roll map and the roll map may improve the productivity and quality of the secondary battery manufacturing process by digitizing and objectifying aspects of a process that depend on an operator's discretion. A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in an already shipped battery cell, history data of the manufacture of the battery cell may be retrieved based on the cell ID to identify a cause of a problem in the manufacture of the battery cell.

The electrode sheet ES may be processed by the processing apparatus 115. For example, the processing apparatus 115 may include a coater, and the electrode sheet ES may be coated with an electrode slurry. As another example, the treatment apparatus 115 may include an induction heating device and pressing rolls, and a roll pressing process may be performed on the electrode sheet ES coated with the electrode slurry. As another example, the processing apparatus 115 may include a splicing die and a scrap port, and a part of the electrode sheet ES may be scrapped. As another example, the processing apparatus 115 may include a slitting knife, and the electrode sheet ES may be separated into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

The first rotary encoder 121 may be configured to sense the amount of the electrode sheet ES unwound from the first electrode roll ER1 by the unwinder 111. Accordingly, the first rotary encoder 121 may be configured to generate an unwinding amount signal UWAS indicating an unwinding amount of the electrode sheet ES. The first rotary encoder 121 may be configured to transmit the unwinding amount signal UWAS to the first controller 141. The first controller 141 may be configured to collect unwinding amount data based on the unwinding amount signal UWAS of the electrode sheet ES.

The second rotary encoder 123 may be configured to sense the amount of the electrode sheet ES wound into the second electrode roll ER2 by the rewinder 113. Accordingly, the second rotary encoder 123 may be configured to generate a winding amount signal WAS indicating a winding amount of the electrode sheet ES. The second rotary encoder 123 may be configured to transmit the winding amount signal WAS to the first controller 141. The first controller 141 may be configured to collect winding amount data based on the winding amount signal WAS of the electrode sheet ES.

In some cases, a part of the electrode sheet ES may be scraped and thus the amount of the electrode sheet ES unwound by the unwinder 111 may be different from the amount of the electrode sheet ES wound by the rewinder 113. When the electrode sheet ES is elongated due to pressure in the roll pressing process, the amount of the electrode sheet ES unwound by the unwinder 111 may be different from the amount of the electrode sheet ES wound by the rewinder 113.

The first controller 141 may be configured to collect the coordinate data CD of the electrode sheet ES, based on one of the winding amount signal WAS and the unwinding amount signal UWAS of the electrode sheet ES. For example, the first controller 141 may determine a moving distance of the electrode sheet ES in a current process step based on the winding amount signal WAS of the electrode sheet ES. Accordingly, a coordinate indicating a relative position of a part of the electrode sheet ES, which is being wound by the rewinder 113, on the electrode sheet ES may be determined at each point in time when the roll-to-roll process is performed on the electrode sheet ES. Furthermore, by calibrating coordinates using offset lengths OD1, OD2 and OD3, a relative position of each of processed or sensed parts of the electrode sheet ES on the electrode sheet ES may be identified. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each part of the electrode sheet ES. That is, each of arbitrary points on the electrode sheet ES may match a coordinate. The coordinates may be one-dimensional (1D) quantities in a machine direction (or a longitudinal direction) of the electrode sheet ES but are not limited thereto. The coordinates may be two-dimensional (2D) quantities in the machine direction and a transverse direction (or a width direction) of the electrode sheet ES.

A sensing part 131S of the measuring device 131 may be configured to measure the electrode sheet ES to collect measurement data of the electrode sheet ES. The sensing part 131S may measure the electrode sheet ES by a scanning method. The sensing part 131S may be configured to scan the electrode sheet ES in the transverse direction. While the measuring device 131 performs scanning in the transverse direction, the electrode sheet ES may be moved in the machine direction by the unwinder 111 and the rewinder 113.

The measurement data may include a plurality of measured values expressed numerically. For example, the measurement data may include size data, e.g., a thickness and a width, of the electrode sheet ES, data of a loading amount of a coating material on the electrode sheet ES, size data, e.g., a width of an insulating material on the coating material and an overlapping width between the coating material and the insulating material, mismatch data between coated lanes on an upper surface of the electrode sheet ES and coated lanes on a lower surface of the electrode sheet E, and the like. Here, the loading amount is the amount of the coating material loaded per unit area of the electrode sheet ES, and may be an area density of the coating material.

The measuring device 131 may include the sensing part 131S and a processor 131P. The sensing part 131S may be configured to sense a physical quantity of the electrode sheet ES to generate a measurement signal MS. For example, the sensing part 131S may include a time delay and integration (TDI) camera, a complementary metal oxide semiconductor (CMOS) image sensor, a time-of-flight (TOF) sensor, etc. The sensing part 131S may include an emitter and a receiver that are configured to perform measurement using a non-destructive signal such as ultrasound waves, microwaves, terahertz waves, or infrared rays. The sensing part 131S may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 131 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 131 is a loading amount gauge configured to measure the amount of loading a coating layer on a sheet material SM (e.g., a web gauge of Thermofisher Scientific) or a thickness gauge and measurement data includes loading amounts or thicknesses. Those of ordinary skill in the art would be able to derive an embodiment in which a measuring device includes one of the above-described sensors and is configured to sense one of the above-described measured amounts.

The processor 131P may be configured to collect measurement data based on the measurement signal MS sensed by the sensing part 131S. The processor 131P may be connected to the sensing part 131S by wire or wirelessly. The processor 131P may be configured to correct the measurement data by adding an offset measurement amount to each of the measured values of the measurement data. Due to the progress of a process and the aging of equipment, the measured values of the measurement data may be different from actual values. The processor 131P may correct the measured values of the measurement data based on the offset measurement amount to improve the reliability of the roll map generating system 100 and a roll map generating method. The offset measurement amount may be determined based on information given to an equipment system by a method such as a sample test.

The inspector 133 may be configured to inspect the electrode sheet ES to collect inspection data. For example, the inspector 133 may be, for example, a vision machine. The vision machine is an image-based inspection device, and may capture an image of the electrode sheet ES and identify a defect on the electrode sheet ES based on the image of the electrode sheet ES. As another example, the inspector 133 may be an optical character reader (OCR) or an optical bar code reader (OBR). The inspector 133 may be configured to collect data (e.g., defect data or images of the electrode sheet ES) that is not specified numerically but is not limited thereto.

The inspection data may include a judgement of the quality of a part of the electrode sheet ES and a process event. For example, the inspection data may include data about the appearance of the electrode sheet ES collected by an image-based inspection device such as a vision machine, data about disconnections and seams on the electrode sheet ES, data about a part of the electrode sheet ES on which sampling inspection is performed, data about a part of the electrode sheet ES to be scrapped, data about the scraped part of the electrode sheet ES, data about whether the coating material and the insulating material on the electrode sheet ES are defective or not, data about datum points indicating a position of the electrode sheet ES, and defect data indicating whether there are defects such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector 133 may be a color sensor, a joint sensor, a datum point sensor, or a vision machine.

The inspector 133 may include a sensing part 133S and a processor 133P. The sensing part 133S may include one of the sensors described above as examples in relation to the sensing part 131S. The sensing part 133S may be configured to inspect the electrode sheet ES to generate an inspection signal IS. The processor 133P may be configured to collect inspection data based on the inspection signal MS sensed by the sensing part 133S. The processor 133P may be connected to the sensing part 133S by wire or wirelessly.

The measurement data and the inspection data may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on point in times when measurement and inspection are performed, and may be related to time. Accordingly, each of the measured values of the measurement data may be matched to time, and each of evaluation values of the inspection data may be matched to time.

For example, the measurement data may have a series of measured values and time values related to the series of measured values. The measured values and the time values may be matched in a one-to-one manner but are not limited thereto. As another example, the inspection data such as defect data may have a judgement value (e.g., a value indicating a defect) and a time value related to the value indicating the defect. Here, the values indicating defects should be understood to mean that the values include information regarding at least one of the presence of defects and the types of defects.

The first controller 141 may be in operative communication with the first and second rotary encoders 121 and 123, the measuring device 131, and the inspector 133 through a wired or wireless data network. The data network may be unidirectional or bidirectional. The data network may be implemented by a physical channel, WiFi, public networks and/or specialized networks using Bluetooth or other frequency bands.. The first and second rotary encoders 121 and 123, the measuring device 131, and additional measuring devices and inspectors may be configured to collect data from equipment, a workpiece, an intermediate product, and a product in the roll map generating system 100 or to generate a signal for collecting data from thereof.

The first controller 141 may be configured to transmit the coordinate data CD to the processor 131P. The processor 131P may be configured to relate the coordinate data CD with the measurement data to generate coordinate-related measurement data CMD. In general, the measurement data may be processed based on a trigger point.

As a non-limiting example, a trigger point for processing the measurement data may be the completion of scanning. For example, the sensing part 131S may scan the electrode sheet ES in the width direction of the electrode sheet ES, and the measurement data may be stored, processed, manipulated, and transmitted whenever scanning is performed. As another example, the trigger point may be completion of performing scanning a plurality of times or partial completion of scanning. Examples of the processing of the measurement data may include storing the measurement data, manipulating the measurement data (e.g., generating the coordinate-related measurement data CMD), and transmitting the measurement data.

According to example embodiments, the measuring device 131 may be configured to calibrate the coordinate data CD, based on a position of the sensing part 131S of the measuring device 131. More specifically, the measuring device 131 may be configured to calibrate the coordinate data CD based on an offset length OD2, so that coordinates of the coordinate data CD may be related with the measured values of the measurement data.

The measuring device 131 may collect measurement data of a part corresponding to (e.g., overlapping) the sensing part 131S and the coordinate data CD is collected by the second rotary encoder 123 spaced apart from the sensing part 131S as described above, and thus, a part of the electrode sheet ES corresponding to the winding amount signal WAS generated at the same time point and a part of the electrode sheet ES corresponding to the measurement signal MS may be different from each other.

The processor 131P may be configured to collect the coordinate-related measurement data CMD based on the measurement data and the coordinate data CD. The coordinate-related measurement data CMD may a representative value and representative coordinates (e.g., a start coordinate and an end coordinate). The representative value may include at least one of an average, a standard deviation, a median value, a maximum value, or a minimum value of measurement data of a part of the electrode sheet ES inspected by performing scanning once by the sensing part 131S. The representative coordinates (e.g., the start coordinate and the end coordinate) may indicate a start point and an end point of the part of the electrode sheet ES inspected by performing scanning once by the sensing part 131S.

According to example embodiments, the processor 131P may be configured to calibrate the coordinate data CD, which is collected at the same time as the measurement data to collect the coordinate-related measurement data CMD, based on the offset length OD2, and to relate representative coordinates (e.g., a start coordinate and an end coordinate) of the calibrated coordinate data CD with the representative values of the measurement data. Accordingly, the measured values of the measurement data may be matched with times, and the representative values of the coordinate-related measurement data CMD may be matched to the representative coordinates (e.g., the start coordinate and the end coordinate).

A plurality of guide rolls may be interposed between the sensing part 131S and the rewinder 113 to define a moving path of the electrode sheet ES. Accordingly, the offset length OD2 may be defined as a length of the electrode sheet ES between the sensing part 131S and the rewinder 113 according to the moving path of the electrode sheet ES. The offset length OD2 may be equal to or greater than a straight line distance between the sensing part 131S and the rewinder 113.

The processor 131P may be configured to generate evaluation data based on the coordinate-related measurement data CMD. The evaluation data may include a judgement value of a process of each of a plurality of sections of the electrode sheet ES. The judgement value of the process of each of the plurality of sections of the electrode sheet ES may be determined based on a comparison between a set range and measured values (or a representative value of the measured values).

For example, a representative value within a first range may be determined to be normal, a representative value within a second range greater than the first range may be determined to be excessive, a representative value within a third range greater than the second range may be determined to be very excessive, a representative value within a fourth range less than the first range may be determined to be insufficient, and a representative value within a fifth range less than the fourth range may be determined to be very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 131P may be configured to transmit the coordinate-related measurement data CMD to the first controller 141. The coordinate-related measurement data CMD transmitted to the second controller 143 may be transmitted to the server 160 through the communication server 150. The second controller 143 and the communication server 150 may relay communication of data, including the coordinate-related measurement data CMD, between the server 160 and the first controller 141. However, embodiments are not limited thereto. The first controller 141 may directly transmit the coordinate-related measurement data CMD to the server 160.

The first controller 141 may be configured to transmit the coordinate data CD to the processor 133P. The processor 133P may be configured to relate the coordinate data CD with the inspection data to generate coordinate-related inspection data CID.

According to example embodiments, the inspector 133 may be configured to calibrate the coordinate data CD, based on a position of the inspector 133. More specifically, the inspector 133 may be configured to calibrate the coordinate data CD based on the offset length OD3, so that coordinates of the coordinate data CD may be related with the evaluation values of the inspection data. The offset length OD3 may be equal to or greater than a straight line distance between the sensing part 133S and the rewinder 113.

The processor 133P may be configured to collect the coordinate-related inspection data CID based on the inspection data and the coordinate data CD. The coordinate-related inspection data CID may include evaluation values (e.g., values indicating whether there are defects, a sequence of defects, whether there are datum points, a sequence of datum points, etc.) and representative coordinates (e.g., a start coordinate and an end coordinate).

According to example embodiments, the processor 133P may be configured to calibrate the coordinate data CD, which is collected at the same time as the inspection data to collect the coordinate-related inspection data CID, based on the offset length OD3, and to relate coordinates of the calibrated coordinate data CD with the evaluation values of the inspection data. Accordingly, the evaluation values of the inspection data may be matched to times, and the coordinate-related inspection data CID may be matched to the coordinates. A series of evaluation values (e.g., values indicating a series of defects) of the coordinate-related inspection data CID may be matched to representative coordinates (e.g., a start coordinate and an end coordinate) of a section of the electrode sheet ES corresponding to a series of evaluation values.

The first controller 141 may be configured to receive an equipment signal ESS from the processing apparatus 115. The first controller 141 may be configured to collect equipment data ED based on the equipment signal ESS. The equipment signal ESS may include operation information of the processing apparatus 115.

For example, the equipment signal ESS may include information about a gap of a coating die, a pressure, speed and feed rate of a slurry pump, and a level of a slurry supply tank. As another example, the equipment signal ESS may include information about a temperature of an induction heating device, pressure of pressing rolls, and positions of the pressing rolls. As another example, the equipment signal ESS may include information about a speed of a slitting knife. As another example, the equipment signal ESS may include information about a moving speed, tension, and friction of the electrode sheet ES by the unwinder 111 and the rewinder 113.

The first controller 141 may be configured to transmit the equipment data ED, the coordinate-related measurement data CMD, the coordinate-related inspection data CID, and a winding amount signal WAS to the second controller 143.

The second controller 143 may be configured to control operations of the unwinder 111, the rewinder 113, the processing apparatus 115, and the completion knife 117. The second controller 143 may be configured to generate a signal for operating or stopping the unwinder 111, the rewinder 113, the processing apparatus 115, and the completion knife 117. The signal for operating or stopping the unwinder 111, the rewinder 113, the processing apparatus 115, and the completion knife 117 may be generated based on a recipe of the electrode sheet ES.

For control of a process, a communication line for connecting the second controller 143 and the server 160 via the communication server 150 may be installed between the second controller 143 and the server 160. Accordingly, data transmission through the second controller 143 may reduce resources required for the installation of the communication line and ensure efficient data processing and management, compared to a case in which the first and second rotary encoders 121 and 123 and the measuring device 131 directly transmit an unwinding amount signal UWAS, a winding amount signal WAS, and the measurement signal MS to the first server 160 and a case in which the first controller 141 directly transmits the coordinate-related measurement data CMD and the evaluation data to the server 160.

The communication server 150 may include a program for communication between the second controller 143 of the manufacturing equipment and the server 160. The communication server 150 may be implemented by hardware as described below. A language and protocol of the server 160 may be different from a language and protocol of the second controller 143. For example, the language of the server 160 may be SQL, and the language of the second controller 143 may be a ladder diagram.

The communication server 150 may be configured to convert the product ID and recipe of the electrode sheet ES transmitted from the server 160 into the language of the second controller 143. In addition, the communication server 150 may be configured to convert the equipment data ED, the coordinate-related measurement data CMD, and the coordinate-related inspection data CID into the language of the server 160 and record the coordinate-related measurement data CMD in a database of the server 160.

The server 160 may be configured to generate a roll map based on the equipment data ED, the coordinate-related measurement data CMD, and the coordinate-related inspection data CID. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

According to example embodiments, the server 160 may be a data processing system that supports all activities required to manage the manufacture of a secondary battery, such as work schedule management, work instructions, quality control, and work performance aggregation. The server 160 may be, for example, manufacturing execution system (MES) software. The server 160 may be configured to perform inputting, processing, outputting, and communication of data necessary for the manufacture of electrodes, including the coating process, a press process, and a slitting process.

As another example, the server 160 may be configured to store and process raw measurement data of the electrode sheet ES. The server 160 may be configured to continuously monitor the processing of the electrode sheet ES based on the measurement data to manage the quality of processing the electrode sheet ES. The server 160 may be a static process controller (SPC). The server 160 may collect and analyze manufacturing data in almost real time to identify problematic conditions in a timely manner and provide a notification to an operator before potential problems occur.

As another example, the server 160 may be a solution to managing all information and processes at all stages of life cycles of products or services of a whole global supply chain. The server 160 may be, for example, a product lifecycle management (PLM) solution. The server 160 may store data about items, components, products, manuals, requirements, engineering change orders, quality, and workflows. The server 160 may be configured to generate and store electrode specification data ESD.

The processor 131P, the processor 133P, the first controller 141, the second controller 143, the communication server 150, and the server 160 may be implemented by hardware, firmware, software, and a combination thereof. For example, the processor 131P, the processor 133P, the first controller 141, the second controller 143, the communication server 150, and the server 160 may include computing devices such as workstation computers, desktop computers, laptop computers, and tablet computers. The processor 131P, the processor 133P, the first controller 141, the second controller 143, the communication server 150, and the server 160 may include a simple controller, a complex processor such as a microprocessor, a CPU or a GPU, a processor configured by software, dedicated hardware, or firmware. The processor 131P, the processor 133P, the first controller 141, the second controller 143, the communication server 150, and the server 160 may be implemented by, for example, a general-purpose computer or application-specific hardware such as a digital signal processor (DSP), a field programmable gate array (FPGA) or an application-specific integrated circuit (ASIC).

The server 160 may include a physical server or a cloud server. The server 160 may provide data and an analysis result to an operator through various frameworks. A framework may include a protocol that supports data transmission so that the display device 160 may visualize data through a user interface and provide updated visualization when new data is calculated by the server 160. The protocol that supports data transmission may use HTML, JavaScript, and/or JSON.

The server 160 may include various types of application programming interfaces (APIs) to store data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The roll map generating system 100 may implement a plug-in architecture1 to provide a plug-and-play connection between the measuring device 130, the inspector 133, and additional measuring devices and inspectors, together with an API for obtaining data. Accordingly, resources in a certain process step and a specific site can be easily transferred to a different process and different site or new resources can be easily introduced into each process step and each site.

A data network between the components of the roll map generating system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the roll map generating system 100 may further include a manual input system that allows an operator to input manufacturing data. The roll map generating system 100 may allow an operator to input data using an input tool and a computer-based input of manufacturing data such as Excel file scraping.

According to some embodiments, the operations of the processor 131P, the processor 133P, the first controller 141, the second controller 143, the communication server 150, and the server 160 may be implemented by instructions stored in a machine-readable medium that is readable and executable by one or more processors. Here, the machine-readable medium may include an arbitrary apparatus for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processor 131P, the processor 133P, the first controller 141, the second controller 143, the communication server 150, and the server 160 may consist of firmware, software, routines, and instructions for performing the above-described operations or processes described below. For example, the processor 131P, the processor 133P, the first controller 141, the second controller 143, the communication server 150, and the server 160 may be instantiated in a memory.

The first and second controllers 141 and 143 may be, for example, programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a central process unit (CPU), an input interface, an output interface, a communication interface, and first and second memory devices. The power supply may be configured to supply operating power to the CPU, the input module, the output module, the communication interface, and the first and second memory devices. The first memory device may be configured to store a system program of the PLC. The first memory device may be, for example, a read-only memory (ROM) and be configured to permanently store data for an operating system of the second controller 143. The second memory device may be configured to store a user program and data. The user program may be a program set by a user so that the CPU may perform a specific function. The data may include the coordinate-related measurement data CMD and the coordinate data CD described above. The second memory device may be configured to further store state information of states of input and output devices, and values of a timer, a counter, and other internal devices. The second memory device may be, for example, a random access memory (RAM).

The CPU may be configured to control communication between modules that implement logic and convert an input signal into an output operation signal. The CPU may operate based on the system program stored in the first memory device. The CPU may be configured to manipulate data based on the user program stored in the second memory device.

When the PLC operates, the CPU may scan current input conditions and the data and store them in a memory device. Next, the CPU may be configured to read and execute the user program step by step and then transmit a result to one of an output module, a communication module, and a memory device.

The input module and the output module perform isolation and signal conditioning and thus sensors and actuators may be directly connected to the input module and the output module without other circuits. The input module and the output module may be configured to transmit data between the CPU and an external device.

Conditions and data of industrial devices and production processes may be transmitted to the CPU through the input module. A result of processing performed by the CPU may be transmitted to an actuator through the output module. The input module may include, for example, a mechanical switch for position sensing, a proximity switch, a photoelectric switch, an encoder, a temperature and pressure switch, a potentiometer, a linear variable differential transformer, a strain gauge, a thermistor, a thermal transistor, and digital and analog devices such as an AC/DC thermocouple switch. The input module may provide an interface between the input device and a CPU operating based on a low DC voltage. Some input devices may generate an analog signal that is in a high-voltage range. The input module may be configured to convert the signal generated by the input device into a voltage that is in a range acceptable by the CPU.

The output module may be configured to generate a signal for control of an operation of an actuator. The output module may include a relay, a transistor, and a triac. The output module may include a relay, a contactor, a solenoid valve, a motor, and the like.

However, these components are only examples provided for convenience of description, and the processor 131P, the processor 133P, the first controller 141, the second controller 143, the communication server 150, and the server 160 described above may also result from computing devices, distributed computing devices, processors, firmware, software, routines, and other devices executing routines, and instructions.

An architecture configured to generate a roll map may be implemented by adding only the first controller 141 to the second controller 143, the communication server 150 and the server 160, which are essential elements in modern process management systems. That is, in the roll map generating system 100 according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes. Those of ordinary skill in the art would be able to easily derive a roll map generating system including an integrated PLC performing the functions of each of the first controller 141 and the second controller 143, based on the above description.

### (Second Embodiment)

FIG. 2 is a flowchart of a roll map generating method according to example embodiments.

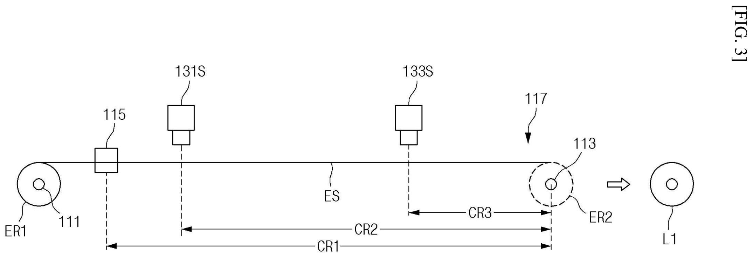

FIG. 3 is a diagram for describing a roll map generating method according to example embodiments.

Referring to FIGS. 1 to 3, in P110, the electrode sheet ES may be cut. An electrode roll may be completed and a first lot L1 may be provided by cutting the electrode sheet ES. The electrode sheet ES may be cut based on the winding amount signal WAS. According to example embodiments, the second controller 143 may be configured to generate a signal for controlling an operation of the completion knife 117 based on the winding amount signal WAS. After a target winding amount of the electrode roll ER2 is reached, the electrode roll ER2 may be separated by cutting the electrode sheet ES to complete the first lot L1. The completed first lot L1 may be unloaded from the rewinder 113 as indicated by an arrow of FIG. 3.

Next, in P120, a calibration section of the electrode sheet ES may be identified. The calibration section may be identified by the server 160. The calibration section of the electrode sheet ES may vary according to data. Here, the data may include the equipment data ED, the coordinate-related measurement data CMD, and the coordinate-related inspection data CID. More specifically, a calibration section CR1 of the equipment data ED, a section calibration CR2 of the coordinate-related measurement data CMD, and a calibration section CR3 of the coordinate-related inspection data CID may be different from one another.

The calibration section may be between a position on the electrode sheet ES from which data is collected and a cutting part of the electrode sheet ES. For example, the calibration section CR1 of the equipment data ED may be collected from a part of the electrode sheet ES between a part of the electrode sheet ES processed by the processing apparatus 115 when the first lot L1 is separated by the completion knife 117 and the cutting part of the electrode sheet ES that is cut by the completion knife 117. As another example, the calibration section CR2 of the coordinate-related measurement data CMD may be collected from a part of the electrode sheet ES between a part of the electrode sheet ES sensed by the sensing part 131S when the first lot L1 is cut by the completion knife 117 and the cutting part of the electrode sheet ES that is cut by the completion knife 117. As another example, the calibration section CR3 of the coordinate-related inspection data CMD may be collected from a part of the electrode sheet ES between a part of the electrode sheet ES sensed by the sensing part 133S when the first lot L1 is cut by the completion knife 117 and the cutting part of the electrode sheet ES that is cut by the completion knife 117.

Next, in P130, data collected from the calibration section may be assigned to a roll map of a subsequent lot. The equipment data ED is collected from the calibration section CR1, the coordinate-related measurement data CMD is collected from the calibration section CR2, and the coordinate-related inspection data CID is collected from the calibration section CR3 before the completion of the first lot L1. Accordingly, lot IDs of the equipment data ED collected from the calibration section CR1, the coordinate-related measurement data CMD collected from the calibration section CR2, and the coordinate-related inspection data CID collected from the calibration section CR3 may indicate the first lot L1 as shown in Table 1 below.

In Table 1, a first column represents lot IDs before calibration of data, a second column represents coordinates before calibration of the data, a third column represents lot IDs after calibration of the data, and a fourth column represents coordinates after calibration of the data.

**[Table 1]**

| Lot ID | Coordinate (a.u.) | Calibrated lot ID | Calibrated coordinate (a.u.) |
|---|---|---|---|
| First lot | 1398 | First lot | 1398 |
| First lot | 1399 | First lot | 1399 |
| First lot | 1400 | Second lot | 0 |
| First lot | 1401 | Second lot | 1 |
| First lot | 1402 | Second lot | 2 |
| First lot | omitted | Second lot | omitted |
| First lot | 1465 | Second lot | 65 |
| First lot | 1466 | Second lot | 66 |
| First lot | 1467 | Second lot | 67 |
| First lot | 1468 | Second lot | 68 |
| First lot | 1469 | Second lot | 69 |
| Second lot | 70 | Second lot | 70 |
| Second lot | 71 | Second lot | 71 |
| Second lot | 72 | Second lot | 72 |
| Second lot | 73 | Second lot | 73 |
| Second lot | omitted | Second lot | omitted |

A lot subsequent to the first lot L1 may be referred to as a second lot. The assigning of the data collected from the calibration section to the roll map of the subsequent lot may include setting a lot ID of the data collected from the calibration section to indicate the second lot. The lot IDs of the equipment data ED collected from the calibration section CR1, the coordinate-related measurement data CMD collected from the calibration section CR2, and the coordinate-related inspection data CID collected from the calibration section CR3 may be calibrated to indicate the second lot. Accordingly, when a roll map of the second lot is called based on the lot ID, data collected from the calibration section may be retrieved. Next, in P140, coordinates of the data collected from the calibration section may be calibrated. A lower limit of the coordinates of the data collected from the calibration section may be a completed length. Here, the completed length may be a target winding length of the electrode roll ER2 and be determined according to a recipe of a product. An upper limit of the coordinates of the data collected from the calibration section may be the sum of the completed length and a corresponding one of the offset lengths OD1, OD2, and OD3. The coordinates of the data collected from the calibration section may be calibrated based on the completed length of the first lot L1. The coordinates of the data collected from the calibration section may be calibrated based on subtraction of the completed length of the first lot L1. In Table 1, an example of a completed length is 1400 (arbitrary unit, hereinafter, "a.u.") and an example of an offset length is 69 (a.u.). Accordingly, the lower limit of the coordinates of the data collected from the calibration section is 1400 (a.u.), and the upper limit of the coordinates is 1469 (a.u.). Accordingly, in Table 1, the coordinates of data collected from the calibration section that is in a range of 1400 (a.u.) to 1469 (a.u.) may be calibrated to be in a range of 0 (a.u.) to 69 (a.u.).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising:
cutting a cutting part of an electrode sheet, to provide a first lot, the electrode sheet being moved between an unwinder and a rewinder; and
identifying a calibration section of the electrode sheet,
wherein the calibration section is between a part of the electrode sheet sensed by a sensing part when the electrode sheet is cut and the cutting part of the electrode sheet.

2. The roll map generating method of claim 1, wherein a lot identifier (ID) of data collected from the calibration section indicates the first lot.

3. The roll map generating method of claim 1, further comprises assigning the data collected from the calibration section to a roll map of a second lot subsequent to the first lot.

4. The roll map generating method of claim 3, wherein the assigning of the data to the roll map of the second lot subsequent to the first lot includes setting a lot identifier (ID) of the data to indicate the second lot.

5. The roll map generating method of claim 1, further comprises calibrating coordinates of data collected from the calibration section.

6. The roll map generating method of claim 1, wherein a lower limit of coordinates of data collected from the calibration section is a completed length of the first lot.

7. The roll map generating method of claim 6, wherein the coordinates of the data are calibrated based on the completed length.

8. The roll map generating method of claim 6, wherein the coordinates of the data are calibrated based on subtraction of the completed length.

9. The roll map generating method of claim 6, wherein an upper limit of the coordinates of the data is a sum of the completed length and an offset length, and
the offset length is a length of the electrode sheet between the sensing part and the rewinder.

10. A roll map generating method comprising:
cutting a cutting part of an electrode sheet to provide a first lot, the electrode sheet being moved between an unwinder and a rewinder; and
identifying a calibration section of the electrode sheet,
wherein the calibration section is between a part of the electrode sheet processed by a processing apparatus when the electrode sheet is cut and the cutting part of the electrode sheet.

11. The roll map generating method of claim 10, further comprises assigning equipment data collected from the processing apparatus to a roll map of a second lot subsequent to the first lot.

12. The roll map generating method of claim 10, further comprises calibrating coordinates of data collected from the calibration section.

13. The roll map generating method of claim 10, wherein a lower limit of coordinates of data collected from the calibration section is a completed length of the first lot.

14. The roll map generating method of claim 13, wherein the coordinates of the data are calibrated based on the completed length.

15. The roll map generating method of claim 13, wherein an upper limit of the coordinates of the data is a sum of the completed length and an offset length, and
the offset length is a length of the electrode sheet between the processing apparatus and the rewinder.
